**Europäisches Patentamt**

**European Patent Office**

**Office européen des brevets**

(19)

(11) **EP 1 388 739 A1**

(12) **EUROPÄISCHE PATENTANMELDUNG**

(43) Veröffentlichungstag:
**11.02.2004 Patentblatt 2004/07**

(51) Int Cl.[7]: **G01S 17/36**, G01S 7/497,
G01S 7/491

(21) Anmeldenummer: **02017890.1**

(22) Anmeldetag: **09.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder:
• **HILTI Aktiengesellschaft**
  **9494 Schaan (LI)**
• **JENOPTIK Laser, Optik, Systeme GmbH**
  **07745 Jena (DE)**

(72) Erfinder:
• **Gogolla, Torsten**
  **9488 Schellenberg (LI)**
• **Winter, Andreas**
  **6800 Feldkirch (AT)**
• **Seifert, Helmut**
  **07616 Serba (DE)**

(74) Vertreter: **Wildi, Roland**
**Hilti Aktiengesellschaft,**
**Feldkircherstrasse 100,**
**Postfach 333**
**9494 Schaan (LI)**

(54) **Laserdistanzmessgerät mit Phasenlaufzeitmessung**

(57) Ein Laserdistanzmessgerät (1) und ein Messverfahren mit einer zur Emission eines hochfrequent intensitätsmodulierten Messlichtstrahls (3) ausgebildeten Laserdiode (4), welche mit einer ein Hochfrequenzmesssignal (9) erzeugenden Signalerzeugungseinheit (SEE) zur Hochfrequenzübertragung geeignet verbunden ist, mit zumindest einem zum Empfang des an einem Messobjekt (5) reflektierten Messlichtstrahls (3) ausgebildeten Empfängerfotodetektor (8a), welcher mit einem zur Erzeugung eines, eine Phaseninformation des reflektierten intensitätsmodulierten Messlichtstrahls (3) enthaltenden, niederfrequenten Phasenlaufzeitsignals ($S_1$) ausgebildeten Hochfrequenzdemodulator (13) verbundenen ist und mit einem zur Berechnung einer Distanz (D) aus dem Phasenlaufzeitsignal ($S_1$) ausgebildeten Mikrocontroller (μC), welcher mit dem Hochfrequenzdemodulator (13) verbundenen ist, wobei der Mikrocontroller (μC) zur Bestimmung eines Störmodulationsanteils mit einem im Messlichtstrahl (3) angeordneten Kontrollfotodetektor (8c) zur Niederfrequenzübertragung geeignet verbunden ist.

Fig.1

EP 1 388 739 A1

## Beschreibung

Die Erfindung bezeichnet ein optoelektronisches Distanzmessgerät mit einem intensitätsmodulierten Messlichtstrahl basierend auf dem Prinzip der Phasenlaufzeitmessung.

Derartige optoelektronischen Distanzmessgeräte eignen sich zur Messung an technischen Oberflächen, d. h., sie kommen ohne den Einsatz definierter Zielmarken aus. Zur Bestimmung der Distanz von der Laserdiode über das Messobjekt zu der Fotodiode wird der Messlichtstrahl der Laserdiode in der Regel in seiner Intensität moduliert, d.h., dem Messlichtstrahl wird ein Messsignal mit einer hochfrequenten Messfrequenz überlagert. Bei den meisten derzeitigen genauen optoelektronischen Distanzmessgeräten wird das Phasenlaufzeitverfahren angewandt, bei dem mit periodisch intensitätsmodulierter emittierter Laserstrahlung gearbeitet wird. Die Distanz ergibt sich durch Messung der Phasendifferenz bezüglich zweier detektierter periodischer Phasenlaufzeitsignale entlang der Messstrecke bzw. einer Referenzstrecke, welche auch nach einer Herabmischung auf eine niedrigere Zwischenfrequenz erhalten bleibt. Die Messung von Distanzbereichen bis zu mehreren 100 m mit Genauigkeiten von wenigen Millimetern ist für zahlreiche Anwendungen insbesondere in der Bauindustrie, im Handwerk und im Anlagenbau von grosser Bedeutung. In diesem Anforderungsbereich mit hochgenauen Messungen im weiten Distanzbereich ist die Beseitigung bzw. Unterdrückung von Messfehlerquellen bei der optoelektronischen Distanzmessung notwendig, insbesondere die Unterdrückung störender nieder- und hochfrequenter Störmodulationsanteile im Messlichtstrahl. Insbesondere bei sehr hohen Messfrequenzen $f_M$ von beispielsweise 1 GHz sind die beschriebenen Störmodulationsanteile nicht oder nur unter einem grossen Aufwand vermeidbar. Zudem sind die Störmodulationsanteile abhängig von Temperatur und Alterung, so dass eine initiale Kalibrierung und die Verwendung von Korrekturtabellen zur Fehlerbeseitigung unzureichend ist.

Nach der DE10006493 werden bei hohen Messfrequenzen von bspw. 1 GHz zur eindeutigen Bestimmung von Distanzbereichen grösser als bspw. 100 m mehrere verschiedene Messfrequenzen verwendet, im Realfall mehr als zwei.

Die EP601847B1 beschreibt ein auf linearer Laserlichtfrequenzmodulation (Laserfrequenzchirp) basierendes Laserdistanzmessgerät, bei dem zur Beseitigung von Nichtlinearitäten beim Laserfrequenzchirp mittels photonischer Mischung des Laserchirpmesssignals mit einem Laserlokaloszillatorsignal ein elektrisches Regelsignal erzeugt wird, das mit der Frequenzdifferenz zwischen beiden Lasersignalen oszilliert. Mit Steuersignalen eines Mikrocontrollers wird mittels Quadraturmodulation im Spektrum des elektrischen Regelsignals ein Seitenband unterdrückt. Zudem dient der Mikrocontroller zur Generierung eines Korrektursignals, um gemessene Nichtlineariäten beim Laserfrequenzchirp vorab zu kompensieren, sowie zur Erzeugung eines temporär gespeicherten Nachführ/Halte-Signals um ein gemessenes Fehlersignal nahe bei Null zu halten.

Nach der EP439011 wird die Laserdiode zeitlich nacheinander mit vier jeweils um 90 Grad phasenverschobenen hochfrequenten Oszillatorsignalen moduliert. Die jeweiligen Empfangssignale werden im Empfänger mit den entsprechenden gesendeten Oszillatorsignalen multipliziert, wodurch sich vier Gleichsignale ergeben. Mit diesem System aus vier Gleichungen lassen sich störende Gleichanteile sowie die Signalamplituden eliminieren und die Phasenverschiebung bzw. die Signallaufzeit und damit die Distanz ermitteln. Ein nach dem Empfänger angeordneter Approximationsfilter wird vom Mikrocontroller bezüglich seiner Bandbreite gesteuert. Mit der Treiberschaltung des Senders wird zudem der Laserdiodenstrom und damit die emittierte Lichtleistung geregelt. Zur Lichtleistungsregelung über den Gleichstromarbeitspunkt der Laserdiode besitzt die Laserdiode in ihrem Gehäuse eine Monitorfotodiode, mit der ständig die mittlere Ausgangslichtleistung der Laserdiode gemessen und mittels eines analogen PI-Reglers geregelt wird. Eine Regelung des Gleichstromarbeitspunktes der Laserdiode oder des Approximationsfilters ist zur Störunterdrückung nicht geeignet.

Die Aufgabe der Erfindung besteht in einer Anordnung und einem Verfahren zur Verringerung der durch Störmodulationsanteile im Messlichtstrahl eines optoelektronischen Distanzmessgerätes auftretenden Messfehler.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein Laserdistanzmessgerät eine mit einer, ein Hochfrequenzmesssignal und ein Hochfrequenzmischersignal erzeugenden, Signalerzeugungseinheit verbundene Laserdiode zur Emission eines hochfrequent intensitätsmodulierten Messlichtstrahls, einen mit einem Empfängerfotodetektor zum Empfang des an einem Messobjekt reflektierten Messlichtstrahls zur Hochfrequenzsignalübertragung geeignet verbundenen Hochfrequenzdemodulator zur Erzeugung eines niederfrequenten Phasenlaufzeitsignals, welches eine Phaseninformation des reflektierten intensitätsmodulierten Messlichtstrahls enthält und einen mit dem Hochfrequenzdemodulator verbundenen Mikrocontroller zur Berechnung einer Distanz aus dem Phasenlaufzeitsignal auf, wobei der Mikrocontroller ausschliesslich zur Niederfrequenzsignalübertragung geeignet mit einem im Messlichtstrahl angeordneten Kontrollfotodetektor verbunden ist.

Durch den mit einem im Messlichtstrahl angeordneten Kontrollfotodetektor, welcher sowohl als ein zusätzlicher Fotodetektor als auch ein Empfängerfotodetektor in Doppelfunktion ausgebildet sein kann, ausschliesslich zur Niederfrequenzsignalübertragung geeignet direkt oder über einen Verstärker indirekt verbundenen Mikrocontroller liegen an diesem die niederfrequenten Modulationsanteile des Messlichtstrahls, welche auf Störmodulation hinweisen, wertmässig bestimmbar zur Weiterverarbeitung an. Dabei bedeutet ausschliesslich zur Niederfrequenzsignalübertragung geeignet verbunden, dass nur solche Signale übertragen werden, deren Frequenz wesentlich bspw. kleiner ein Tausendstel geringer als die Modulationsfrequenz des Messlichtstrahls ist.

Vorteilhaft ist der Kontrollfotodetektor als in die Laserdiode integrierte Monitorfotodiode ausgebildet, die zur Leistungsregelung und Überwachung als Standardbauteil bei Laserdioden verfügbar ist und hinsichtlich ihrem Übertragungsverhalten sehr langsam sein kann.

Vorteilhaft ist über den Kontrollfotodetektor, den Mikrocontroller, der Signalerzeugungseinheit, der Laserdiode und den Messlichtstrahl ein Regelkreis ausgebildet, wodurch der Mikrocontroller über Regelverfahren mit Regelparametern die Störmodulationsanteile des Messlichtstrahls minimieren kann.

Vorteilhaft ist bei einer als Quadraturmodulator ausgebildeten Signalerzeugungseinheit zwischen dem Mikrocontroller und der Signalerzeugungseinheit zumindest ein vom Mikrocontroller steuerbares Amplitudensteuermittel wie ein steuerbarer Verstärker, ein steuerbarer Widerstand oder ein steuerbarer D/A-Wandler vorhanden, wodurch bei zwei für eine Quadraturmodulation notwendigen Niederfrequenzsignalen das Amplitudenverhältnis vom Mikrocontroller steuerbar ist. Weiter vorteilhaft ist zusätzlich ein vom Mikrocontroller steuerbares Phasensteuermittel wie ein steuerbarer Phasensteller vorhanden, wodurch zwischen den beiden Niederfrequenzsignalen zusätzlich Unsymmetrien bezüglich der zur Quadraturmodulation notwendigen Phasenlage vom Mikrocontroller steuerbar sind. Durch diese Massnahmen ist ein minimales Störseitenband regelbar, welches einen Störmodulationsanteil darstellt.

Vorteilhaft ist zumindest ein Amplitudensteuermittel bezüglich des Gleichanteils steuerbar, wodurch bei zumindest einem der für eine Quadraturmodulation notwendigen Niederfrequenzsignale der Gleichanteil vom Mikrocontroller steuerbar und somit ein minimaler Restträger regelbar ist, welcher einen Störmodulationsanteil darstellt.

Erfindungsgemäss wird im Messverfahren bei einem Laserdistanzmessgerät in einem ersten Schritt mindestens ein Niederfrequenzsignal generiert, mit dessen Hilfe in einem zweiten Schritt ein Hochfrequenzmischersignal und ein Hochfrequenzmesssignal derart erzeugt wird, dass ein niederfrequentes Mischprodukt zwischen dem Hochfrequenzmischersignal und dem Hochfrequenzmesssignal phasenstarr zu dem im ersten Schritt generierten Niederfrequenzsignal ist, und das Hochfrequenzmesssignal in einem dritten Schritt von einer Laserdiode über deren modulierten Messlichtstrahl emittiert wird und von einem distanzierten Messobjekt reflektiert wird, der reflektierte Messlichtstrahl in einem vierten Schritt zeitversetzt von einem Empfängerfotodetektor empfangen und das zeitversetzte Hochfrequenzmesssignal unter Verwendung des Hochfrequenzmischersignals demoduliert wird sowie in einem fünften Schritt ein aus der Demodulation des zeitversetzten Hochfrequenzmesssignals hervorgehendes niederfrequentes Phasenlaufzeitsignal von einem Mikrocontroller zur Berechnung der Distanz verwendet wird, wobei im dritten Schritt zumindest der niederfrequente Modulationsanteil des mit einem Kontrollfotodetektor detektierten modulierten Messlichtstrahls der Laserdiode dem Mikrocontroller zur wertmässigen Bestimmung eines Störmodulationsanteils bereitgestellt wird.

Durch die Bereitstellung der auf Störmodulationsanteile hindeutenden niederfrequenten Modulationsanteile des emittierten Messlichtstrahls für den Mikrocontroller sind von diesem Schritte für Gegenmassnahmen durchführbar.

Vorteilhaft wirkt der dritte Schritt durch eine über den Mikrocontroller geregelte Rückkopplung zum ersten Schritt zurück, wodurch das Niederfrequenzsignal vom Mikrocontroller zur Minimierung von Störmodulationsanteilen modifiziert werden kann, bspw. über dessen Signalform, Phase und/oder Amplitude.

Vorteilhaft werden im ersten Schritt zwei um 90° phasenversetzte Niederfrequenzsignale generiert, welche in dem zweiten Schritt zu dem Hochfrequenzmesssignal und dem Hochfrequenzmischersignal quadraturmoduliert werden, wodurch bei der Modulation eine Einseitenbandmodulation mit Trägerunterdrückung prinzipiell realisierbar ist.

Vorteilhaft wird bei einer Quadraturmodulation im zweiten Schritt vom Mikrocontroller zumindest ein Niederfrequenzsignal bezüglich seiner Amplitude und/oder Phase geregelt, wodurch Symmetrieunterschiede zwischen den beiden Niederfrequenzsignalen, welche zu einem als Störmodulationsanteil wirksamen Restträger und einem unerwünschten Seitenband führen, ausregelbar sind.

Vorteilhaft werden im ersten Schritt auf ein Schreibbefehl hin, bspw. einem Zählsignal oder beim Ausschalten, die aktuellen Regelparameter in einen nichtflüchtigen Speicher geschrieben, und auf ein Lesebefehl hin, bspw. beim Einschalten, die Regelparameter mit denen des Speichers initialisiert, wodurch Einregelungszeiten verkürzt werden.

Die Erfindung wird bezüglich eines vorteilhaften Ausführungsbeispiels näher erläutert mit:

Fig. 1      als optoelektronisches Distanzmessgerät

Fig. 2      als Einzelheit der Signalerzeugungseinheit (SEE)

Fig. 3      als Variante der Signalerzeugungseinheit (SEE)

Fig. 4      als Einzelheit des Regelkreises

Fig. 5    als Variante des Regelkreises

Fig. 6    als Variante des Regelkreises

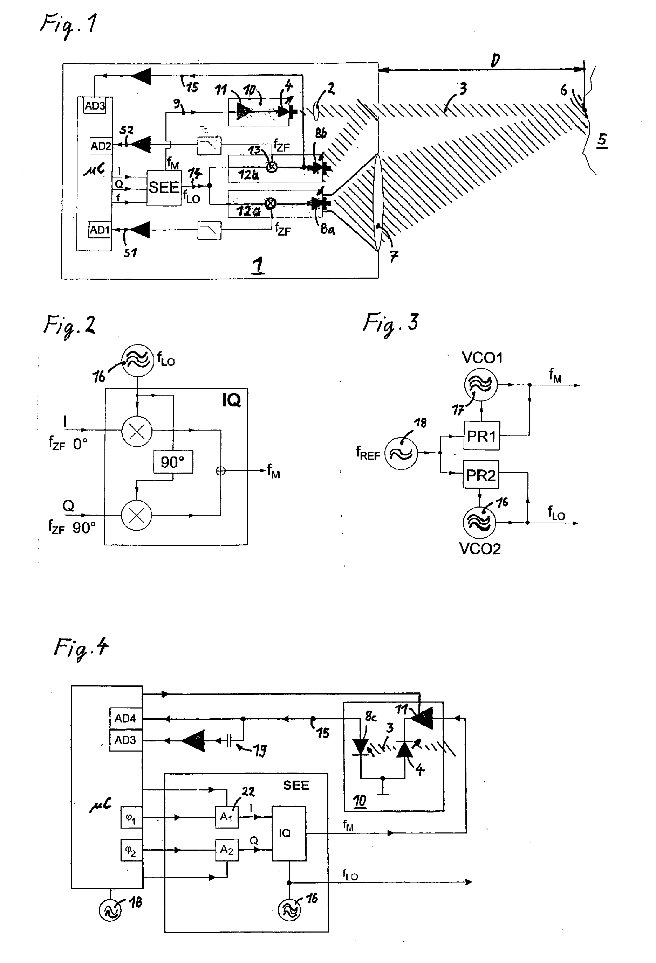

Nach Fig. 1 wird bei einem optoelektronischen Distanzmessgerät 1 der von einer Kollimationsoptik 2 gebündelte Messlichtstrahl 3 einer Laserdiode 4 auf ein Messobjekt 5 gerichtet. Der Messlichtstrahl 3 erzeugt auf der Messobjektoberfläche einen Lichtfleck 6. Das von diesem Lichtfleck 6 ausgehende Streulicht wird mit einer Empfangsoptik 7 auf die fotosensitive Fläche eines als Fotodiode ausgebildeten ersten Empfängerfotodetektors 8a fokussiert. Zur Bestimmung der Distanz D vom Distanzmessgerät 1 zum Messobjekt 5 wird dem Messlichtstrahl 3 der Laserdiode 4 ein hochfrequentes Messsignal 9 überlagert, wobei als Messverfahren das Phasenlaufzeitverfahren angewandt wird, bei dem mit periodisch intensitätsmodulierter emittierter Laserstrahlung gearbeitet wird. Hierzu wird der Sender 10 mit dem Messsignal 9 einer Signalerzeugungseinheit SEE mit der Messfrequenz $f_M$ beaufschlagt, wobei mit einem Laserdiodentreiber 11 des Senders 10 über den Laserdiodenstrom die emittierte Lichtleistung moduliert wird. Der Messlichtstrahl 3 durchläuft nach seiner Emission die zu messende Distanz D hin und zurück, gelangt anschliessend auf die aktive Fläche des ersten Empfängerfotodetektors 8a des ersten Empfängers 12a und wird dort in einen äquivalenten Fotostrom konvertiert. Zur Phasenreferenz wird der Messlichtstrahl 3 nach seiner Emission teilweise über eine geräteinterne und bezüglich seiner Länge bekannte Referenzstrecke auf die aktive Fläche eines als Fotodiode ausgebildeten zweiten Empfängerfotodetektors 8b eines zweiten Empfängers 12b geführt und dort ebenfalls in einen äquivalenten Fotostrom konvertiert. Die Fotoströme werden in den jeweiligen Empfängern 12a, 12b verstärkt und in einem als Mischer ausgebildeten Hochfrequenzdemodulator 13 mit einem Mischersignal 14 der Mischerfrequenz $f_{LO}$ gemischt. Die Zwischenfrequenz $f_{ZF}$ entspricht der Frequenzdifferenz $|f_M - f_{LO}|$. Die Mischerfrequenz $f_{LO}$ der Signalerzeugungseinheit SEE weicht von der Messfrequenz $f_M$ des Messsignals 9 geringfügig ab, so dass nach einer Tiefpassfilterung durch den Mischvorgang im ersten und zweiten Empfänger 12a, 12b ein erstes und zweites niederfrequentes Phasenlaufzeitsignal $S_1$ und $S_2$ mit der Zwischenfrequenz $f_{ZF}$ entsteht, wobei die Phasenbeziehung des hochfrequenten Messsignals 9 und des Mischersignals 14 auch im konvertierten niederfrequenten Bereich der Zwischenfrequenz $f_{ZF}$ erhalten bleiben. Nach jeweils einer Tiefpassfilterung und einer geeigneten Verstärkung werden die beiden niederfrequenten Phasenlaufzeitsignale $S_1$ und $S_2$ über mikrocontrollerinterne Analog-Digital-Wandler AD1, AD2 digitalisiert einem Mikrocontroller $\mu$C zugeführt. Der Mikrocontroller $\mu$C ermittelt die Phasendifferenz zwischen den Phasenlaufzeitsignalen $S_1$ und $S_2$ und daraus die zu messende Distanz D. Zur Detektion der niederfrequenten Modulationsanteile des Messlichtstrahls 3 wird ein vor dem Hochfrequenzdemodulator 13 konvertierter, niederfrequenter Empfängerfotodiodenstrom des zweiten Empfängerfotodetektors 8b des zweiten Empfängers 12b als niederfrequentes Kontrollsignal 15 verstärkt und über einen mikrocontrollerinternen Analog-Digital-Wandler AD3 dem Mikrocontroller $\mu$C zur Auswertung zugeführt, welcher über digitale Modulationssignale I, Q die Signalerzeugungseinheit SEE zur Erzeugung des Messsignals 9 mit der Messfrequenz $f_M$ und des Mischersignals 14 mit der Mischerfrequenz $f_{LO}$ so manipuliert, dass Störmodulationsanteile im Messlichtstrahl 3 minimiert sind.

In einer modifizierten, nicht extra dargestellten Variante werden die Fotodioden selbst als optoelektronische Mischer eingesetzt, indem ihrer Sperrschichtspannung das Mischersignal 14 überlagert wird, so dass die Empfindlichkeit der Fotodioden gemäss dem Mischersignal moduliert wird

Nach Fig. 2 wird nach der Einzelheit der Signalerzeugungseinheit (SEE) nur genau ein hochfrequenter Mischerfrequenzoszillator 16 zur Erzeugung des Mischersignals 14 mit der Mischerfrequenz $f_{LO}$ verwendet. Durch eine Quadraturmodulation dieses Mischersignals 14 mit zwei mit der Zwischenfrequenz $f_{ZF}$ niederfrequenten um 90 Grad in der Phase verschobenen Modulationssignalen I und Q in einem Quadraturmodulator IQ wird ein phasenstarres sowie in der Frequenz um die Zwischenfrequenz $f_{ZF}$ abweichendes Messsignal 9 mit der Messfrequenz $f_M = f_{LO}f_{ZF}$ erzeugt. Dabei wird einerseits das niederfrequente Modulationssignal I

$$I = A \cdot \sin(2 \cdot \pi \cdot f_{ZF} \cdot t) \tag{1}$$

mit dem Mischersignal 14 der Mischerfrequenz $f_{LO}$

$$Y_{0°} = B \cdot \sin(2 \cdot \pi \cdot f_{LO} \cdot t) \tag{2}$$

multipliziert und andererseits das niederfrequente Modulationssignal Q

$$Q = A \cdot \cos(2 \cdot \pi \cdot f_{ZF} \cdot t) \tag{3}$$

mit dem um 90° phasenverschobenen Mischersignal 14 der Mischerfrequenz $f_{LO}$

$$Y_{90°} = B \cdot \cos(2 \cdot \pi \cdot f_{LO} \cdot t) \tag{4}$$

multipliziert. Die beiden Mischprodukte

$$Y_{0°} \cdot I = C \cdot \cos(2 \cdot \pi \cdot (f_{LO} - f_{ZF}) \cdot t) - C \cdot \cos(2 \cdot \pi \cdot (f_{LO} + f_{ZF}) \cdot t) \tag{5}$$

und

$$Y_{90°} \cdot Q = C \cdot \cos(2 \cdot \pi \cdot (f_{LO} - f_{ZF}) \cdot t) + C \cdot \cos(2 \cdot \pi \cdot (f_{LO} + f_{ZF}) \cdot t) \tag{6}$$

werden anschliessend summiert. Bei idealen Verhältnissen, d.h. bei gleichen Amplituden C der Mischprodukte, bei Gleichphasigkeit des erwünschten Seitenbandes mit der Frequenz $f_{LO} - f_{ZF}$, bei Gegenphasigkeit des unerwünschten Seitenbandes mit der Frequenz $f_{LO} + f_{ZF}$ und bei Modulationssignalen I, Q ohne Gleichanteil wird das Seitenband mit der Frequenz $f_{LO} + f_{ZF}$ sowie der Träger mit der Hochfrequenz $f_{LO}$ exakt unterdrückt. Das Summensignal lautet dann:

$$Z_U = 2 \cdot C \cdot \cos(2 \cdot \pi \cdot (f_{LO} - f_{ZF}) \cdot t) = D_U \cdot \cos(2 \cdot \pi \cdot f_M \cdot t). \tag{7}$$

Im realen Fall sind die Bedingungen hinsichtlich Amplituden, Phasen und dem Gleichanteil aufgrund parasitärer Effekte nicht gegeben. Ein Restanteil des unerwünschten Seitenbands und des Trägers bleibt erhalten. Der Messlichtstrahl 3 wird demnach einerseits mit dem Messsignal 9

$$Z_U = D_U \cdot \cos(2 \cdot \pi \cdot (f_{LO} - f_{ZF}) \cdot t). \tag{8}$$

mit der Messfrequenz $f_M = f_{LO} - f_{ZF}$ des unteren erwünschten Seitenbands und andererseits mit dem Störsignal

$$Z_O = D_O \cdot \cos(2 \cdot \pi \cdot (f_{LO} + f_{ZF}) \cdot t) \tag{9}$$

mit der Frequenz $f_{LO} + f_{ZF}$ des oberen unerwünschten Seitenbands sowie mit dem Störsignal

$$Z_T = D_T \cdot \cos(2 \cdot \pi \cdot f_{LO} \cdot t). \tag{10}$$

mit der Hochfrequenz $f_{LO}$ des Trägers moduliert.

Aufgrund eines nichtlinearen Verhaltens der Laserdiode 4 entstehen im Messlichtstrahl 3 neben den hochfrequenten Modulationsanteilen mit den Frequenzen $f_M = f_{LO} - f_{ZF}$, $f_{LO} + f_{ZF}$ und $f_{LO}$ auch deren niederfrequenten Mischprodukte mit den Frequenzen $f_{ZF}$ und $2 \cdot f_{ZF}$.

Im Messlichtstrahl 3 liegen demnach im Wesentlichen die folgenden Modulationsanteile vor, von denen einige Nutzsignale oder Störsignale sind:

| Modulationsanteil | Frequenz | optische Leistung | ZF-Amplitude | |
|---|---|---|---|---|
| M1 | $f_M = f_{LO} - f_{ZF}$ | $P_1$ | $A_{ZF1}$ | Nutzsignal |
| M2 | $f_M + 2 \cdot f_{ZF} = f_{LO} + f_{ZF}$ | $P_2$ | $A_{ZF2}$ | Störsignal |
| M3 | $fM + f_{ZF} = f_{LO}$ | P3 | $A_{ZF3}$ | |
| M4 | $f_{ZF}$ | $P_4$ | $A_{ZF4}$ | Störsignal |
| M5 | $2 \cdot f_{ZF}$ | P5 | $A_{ZF5}$ | |

Der erste Modulationsanteil M1 ist das Nutzsignal mit der Lichtleistungsamplitude $P_1$. Der zweite und dritte Modulationsanteil M2, M3 geht aus einer realen Quadraturmodulation hervor. Der vierte Modulationsanteil M4 resultiert aus einer Mischung des ersten Modulationsanteils M1 mit dem dritten Modulationsanteil M3 durch Nichtlinearitäten der Laserdiode 4, und der fünfte Modulationsanteil M5 wird durch Mischung des ersten Modulationsanteils M1 mit dem zweiten Modulationsanteil M2 erzeugt. Die Lichtleistungsamplitude $P_1$ ist in der Regel erheblich grösser (> 30 dB) als die Lichtleistungsamplituden $P_2$ bis $P_5$.

Nach der Detektion im Empfänger werden die Modulationsanteile des Messlichtstrahls 3 mit dem Mischersignal 14 der Mischerfrequenz $f_{LO}$ gemischt. Nach der Tiefpassfilterung liefert der erste Modulationsanteil M1 das Nutzsignal mit der Zwischenfrequenz $f_{ZF}$ und der ZF-Amplitude $A_{ZF1}$, der zweite Modulationsanteil M2 ein Störsignal mit derselben Zwischenfrequenz $f_{ZF}$ und der Amplitude $A_{ZF2}$, und der dritte Modulationsanteil M3 ein nicht störendes Gleichsignal. Die niederfrequenten vierten und fünften Modulationsanteile M4 und M5 verlassen ungemischt die Empfänger, wobei der vierte Modulationsanteil M4 mit der Zwischenfrequenz $f_{ZF}$ und der Amplitude $A_{ZF4}$ ebenfalls stört. Da der vierte Modulationsanteil M4 aus dem dritten Modulationsanteil M3 hervorgeht, ist auch der dritte Modulationsanteil M3 indirekt an Messfehlern beteiligt. Alle Modulationsanteile, die im niederfrequenten Bereich Störsignale mit der Zwischenfrequenz $f_{ZF}$ des Nutzsignals erzeugen, rufen Distanzmessfehler $\Delta D$ hervor, wobei der maximale Messfehler des zweiten und vierten Modulationsanteils M2, M4 mit

$$\Delta D_2 = \frac{A_{ZF2}}{A_{ZF1}} \cdot \frac{c}{4 \cdot \pi \cdot f_M} \quad \text{und} \quad \Delta D_4 = \frac{A_{ZF4}}{A_{ZF1}} \cdot \frac{c}{4 \cdot \pi \cdot f_M} \tag{11}$$

beschrieben werden kann. Dabei ist c die Lichtgeschwindigkeit und $f_M$ die Messfrequenz der Laserdiode 4. Es wird ferner davon ausgegangen, dass die Störsignalamplituden $A_{ZF2}$ und $A_{ZF4}$ wesentlich kleiner sind als die Nutzsignalamplitude $A_{ZF1}$. Bei einer Unterdrückung der als Störsignalanteile wirksamen Modulationsanteile M2 oder M4 gegenüber dem Nutzsignal von beispielsweise 25 dB ist bei einer Messfrequenz von $f_M$ = 1 GHz mit einem maximalen Fehler von $\Delta D = \pm$ 1,3 mm zu rechnen.

Die Messfrequenz $f_M$ und die Mischerfrequenz $f_{LO}$ sind in der Frequenz um den Betrag der Zwischenfrequenz $f_{ZF}$ verschoben. Bei der obigen Darstellung wird als Messsignal 9 das untere Seitenband mit der Messfrequenz $f_M = f_{LO} - f_{ZF}$ verwendet. Die als Störmodulationsanteile wirksamen hochfrequenten zweiten und dritten Modulationsanteile M2, M3 liegen bei einer Variante A bei den Frequenzen $f_M + f_{ZF} = f_{LO}$ und $f_M + 2 \cdot f_{ZF} = f_{LO} + f_{ZF}$. In einer alternativen Variante B könnte als Messsignal 9 auch das obere Seitenband mit der Modulationsfrequenz $f_M = f_{LO} + f_{ZF}$ verwendet werden, wobei als Störmodulationsanteile bei den Frequenzen $f_M - f_{ZF} = f_{LO}$ und $f_M - 2 \cdot f_{ZF} = f_{LO} - f_{ZF}$ lägen. In der folgenden Tabelle sind die einschlägigen Frequenzen der beiden alternativen Varianten noch einmal zusammengestellt.

| Variante | Messfrequenz M1 | Störfrequenz M2 | Störfrequenz M3 |
|---|---|---|---|
| A | $f_M = f_{LO} - f_{ZF}$ | $f_M + 2 \cdot f_{ZF} = f_{LO} + f_{ZF}$ | $f_M + f_{ZF} = f_{LO}$ |
| B | $f_M = f_{LO} + f_{ZF}$ | $f_M - 2 \cdot f_{ZF} = f_{LO} + f_{ZF}$ | $f_M - f_{ZF} = f_{LO}$ |

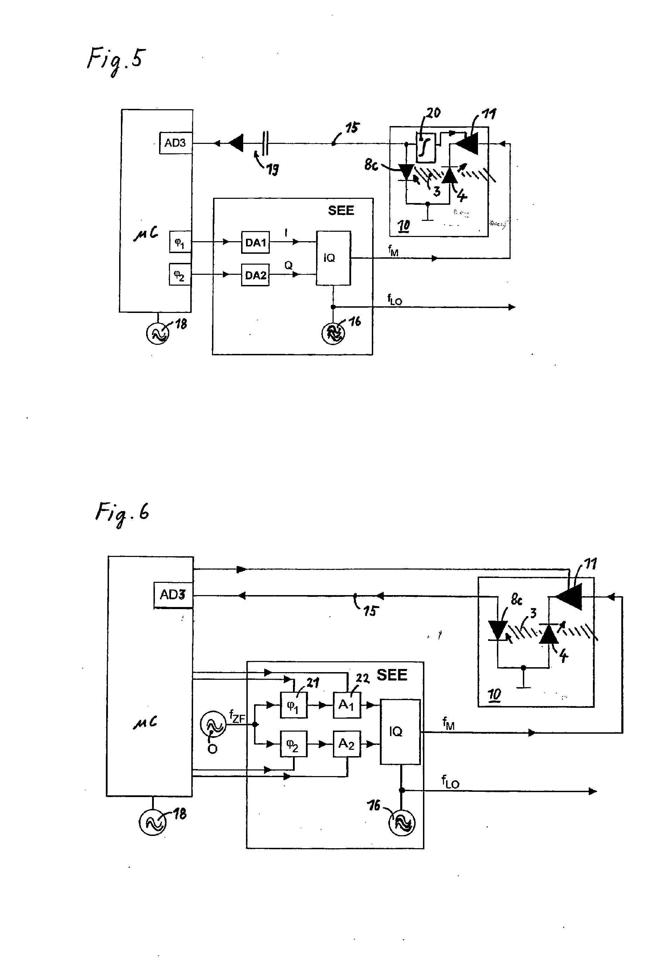

Nach Fig. 3 werden in einer alternativen Variante der Signalerzeugungseinheit SEE zwei getrennte steuerspannungsabhängige Oszillatoren VCO1, VCO2 als Mischfrequenzoszillator 16 mit der Mischerfrequenz $f_{LO}$ und als Messoszillator 17 mit der Frequenz $f_M$ verwendet, die jeweils über Phasenregelschleifen PR1, PR2 frequenz- bzw. phasenstarr mit einem niederfrequenten Referenzoszillator 18 gekoppelt sind. Die Zwischenfrequenz $f_{ZF}$ entspricht der Frequenzdifferenz zwischen den beiden Hochfrequenzsignalen. Dabei wird der Messlichtstrahl 3 neben dem Messsignal 9 mit der Messfrequenz $f_M$ zusätzlich mit den aufgrund der Phasenregelung beim Messoszillator 17 entstehenden Störmodulationsanteilen mit vergleichsweise geringer Leistung und den Frequenzen $f_M \pm n \cdot f_{ZF}$ mit n = 1, 2, 3, .... moduliert.

Die als Störmodulationsanteile wirkenden Modulationsanteile M2 bis M5 liegen somit sowohl bei der Signalerzeugung mit zwei VCOs und Phasenregelkreisen gemäss Fig. 3 als auch bei der Signalerzeugung mit Quadraturmodulation gemäss Fig. 2 vor. Wie oben beschrieben, rufen die störenden hochfrequenten zweiten und dritten Modulationsanteile M2 und M3 im Messlichtstrahl 3 durch nichtlineare Eigenschaften der Laserdiode 4 niederfrequente vierte und fünfte Modulationsanteile M4 und M5 mit der Zwischenfrequenz $f_{ZF}$ und der doppelten Zwischenfrequenz $2 \cdot f_{ZF}$ hervor.

Bei der Einzelheit nach Fig. 4, bei welcher nur der Regelkreis mit dem Mikrocontroller μC, dem Sender 10 und der Signalerzeugungseinheit SEE dargestellt ist, werden die niederfrequenten Modulationsanteile im Messlichtstrahl 3 mit einem als Monitorfotodiode der Laserdiode 4 ausgebildeten Kontrollfotodetektor 8c empfangen, indem ein kleiner Teil des modulierten Messlichtstrahls 3 auf die aktive Fläche dieser hinsichtlich Übertragungsverhalten langsamen Monitorfotodiode geführt wird, die ohnehin im Laserdiodengehäuse zur Regelung der Ausgangslichtleistung vorhanden ist. Der niederfrequente Wechselanteil des Kontrollsignals wird über einen Hochpass 19 vom Gleichanteil entkoppelt, verstärkt und mit dem mikrocontrollerinternen Analog-Digital-Wandler AD3 digitalisiert dem Mikrocontroller $\mu$C zugeführt. Der Mikrocontroller $\mu$C bestimmt anschliessend aus dem digitalisierten niederfrequenten Wechselanteil die beiden störenden vierten und fünfte Modulationsanteile M4, M5 mit der Zwischenfrequenz $f_{ZF}$ und der doppelten Zwischenfrequenz $2 \cdot f_{ZF}$. Der Mikrocontroller $\mu$C erzeugt die niederfrequenten digitale Modulationssignale I, Q zur Quadraturmodulation nach Fig. 2. Die Phasen $\varphi_1$ und $\varphi_2$ der beiden Modulationssignale I, Q werden dabei über das Timing des Mikrocontrollers $\mu$C eingestellt. Die Amplituden $A_1$ und $A_2$ der beiden Modulationssignale I, Q werden mittels vom Mikrocontroller $\mu$C gesteuerte Dämpfungsglieder A1, A2 variiert. Durch Phasen- und Amplitudenanpassung des I- und/oder Q- Modulationssignals wird das unerwünschte Seitenband unterdrückt, so dass der fünfte Modulationsanteil M5 mit der doppelten Zwischenfrequenz $2.f_{ZF}$ im Kontrollsignal 15 und damit auch das unerwünschte Seitenband verschwindet. Mit den Modulationssignalen I

$$I = A_1 \cdot \sin(2 \cdot \pi \cdot f_{ZF} \cdot t + \varphi_1) \qquad (12)$$

und Q

$$Q = A_2 \cdot \cos(2 \cdot \pi \cdot f_{ZF} \cdot t + \varphi_2) \qquad (13)$$

besitzt das unerwünschte Seitenband aus (9) im Realfall die Form

$$Z_O = A_1 \cdot \alpha_1 \cdot \cos(2 \cdot \pi \cdot (f_{LO} + f_{ZF}) \cdot t + \vartheta_1 + \varphi_1) - A_2 \cdot \alpha_2 \cdot \cos(2 \cdot \pi \cdot (f_{LO} + f_{ZF}) \cdot t + \vartheta_2 + \varphi_2), \qquad (14)$$

wobei $\alpha_1$ und $\alpha_2$ ungleiche, aus Unsymmetrien hervorgehende Konstanten und $\vartheta_1$ und $\vartheta_2$ entsprechende Fehlerphasen darstellen. Das unerwünschete Seitenband, d.h. der störende zweite Modulationsanteil M2 bzw. der niederfrequente fünfte Modulationsanteil M5 mit der doppelten Zwischenfrequenz $2.f_{ZF}$ lässt sich mit den Bedingungen

$$\frac{A_1}{A_2} = \frac{\alpha_2}{\alpha_1} \qquad (15)$$

und

$$\varphi_1 - \varphi_2 = \vartheta_2 - \vartheta_1, \qquad (16)$$

welche als Funktion des Störmodulationsanteils durch Amplituden- und/oder Phasenvariationen der Modulationssignale I, Q durch den Mikrocontroller $\mu$C erfüllt werden können, eliminieren. Durch Variation der Gleichanteile des I- und/oder Q-Modulationssignals durch den Mikrocontroller $\mu$C wird in gleicherweise der störende vierte Modulationsanteil M4 im Kontrollsignal 15 mit der Zwischenfrequenz $f_{ZF}$ und damit der Träger minimiert. Die hierzu notwendigen Phasen-, Amplituden- und Gleichspannungswerte der Modulationssignale I, Q werden als Regelparameter für die nächste Messung in einem nichtflüchtigen Speicher im Mikrocontroller $\mu$C gespeichert. Vor jeder Distanzmessung wird eine Kontrollmessung der niederfrequenten vierten und fünften Modulationsanteile M4, M5 und gegebenenfalls eine Anpassung durchgeführt. Neben dem über den Hochpass abgetrennten niederfrequenten Wechselanteil des Kontrollsignals wird zusätzlich der Gleichanteil des Kontrollsignals dem Mikrocontroller $\mu$C über einen mikrocontrollerinternen Analog-Digital-Wandler AD4 zugeführt. Die Auswertung des Gleichanteils ist für die Störmodulations- bzw. Fehlerreduzierung unerheblich. Dieser Gleichanteil ist massgeblich für die mittlere Ausgangslichtleistung der Laserdiode 4, die aufgrund der Augensicherheit 1 mW nicht übersteigen darf. Der Mikrocontroller $\mu$C kann die Ausgangangsleistung somit direkt über den Laserdiodentreiber 11 kontrollieren und regeln.

Fig. 5 zeigt eine Variante, bei der zur Amplitudeneinstellung der digitalen Modulationssignale I, Q jeweils externe Digital-Analog-Wandler DA1, DA2 verwendet werden. Die Phasen $\varphi_1$ und $\varphi_2$ werden über das Timing mit dem Mikrocontroller $\mu$C eingestellt. Der Sender 10 enthält neben der Laserdiode 4, der als Monitorfotodiode im Messlichtstrahl 3 ausgebildeten Kontrollfotodiode 8c, einen Laserdiodentreiber 11 und einen PI-Regler 20 zur Laserdiodenleistungsregelung. Nur der über einen Hochpass 19 vom Gleichanteil entkoppelte, niederfrequente Wechselanteil des Kontrollsignals wird verstärkt und mit dem mikrocontrollerinternen Analog-Digital-Wandler AD3 digitalisiert dem Mikrocontroller µC zugeführt.

In Fig. 6 ist eine weitere Variante eines Regelkreises dargestellt. Durch ausreichende Dynamik des mikrocontrollerinternen Analog-Digital-Wandlers AD3 braucht der niederfrequente Modulationsanteil des Kontrollsignals der Monitorfotodiode nicht vom Gleichanteil entkoppelt oder separat verstärkt zu werden und wird gemeinsam mit diesem vom Mikrocontroller µC erfasst. Der Sender 10 enthält neben der Laserdiode 4 und der Monitorfotodiode den Laserdiodentreiber 11, welcher zur Laserdiodenleistungsregelung direkt vom Mikrocontroller µC geregelt wird. Innerhalb der Singnalerzeugungseinheit SEE werden sowohl die Phasen $\varphi_1$ und $\varphi_2$ als auch die Amplituden $A_1$ und $A_2$ der Modulationssignale I, Q über externe vom Mikrocontroller µC steuerbare als Phasensteller ausgebildete Phasenstellmittel 21 und als Dämpfungsglieder ausgebildete Amplitudensteuermittel 22 eingestellt, wobei ein beiden Modulationssignalen I, Q gemeinsames ZF-Signal mit der Zwischenfrequenz $f_{ZF}$ mit einem zusätzlichen Oszillator O erzeugt wird.

**Patentansprüche**

1. Laserdistanzmessgerät mit einer zur Emission eines hochfrequent intensitätsmodulierten Messlichtstrahls (3) ausgebildeten Laserdiode (4), welche mit einer zumindest ein Hochfrequenzsignal erzeugenden Signalerzeugungseinheit (SEE) zur Hochfrequenzsignalübertragung geeignet verbundenen ist, mit zumindest einem zum Empfang des an einem Messobjekt (5) reflektierten Messlichtstrahls (3) ausgebildeten Empfängerfotodetektor (8a), welcher mit einem zur Erzeugung eines, eine Phaseninformation des reflektierten intensitätsmodulierten Messlichtstrahls (3) enthaltenden, niederfrequenten Phasenlaufzeitsignals ($S_1$) ausgebildeten Hochfrequenzdemodulator (13) verbundenen ist und mit einem zur Berechnung einer Distanz (D) aus dem Phasenlaufzeitsignal ($S_1$) ausgebildeten Mikrocontroller (µC), welcher mit dem Hochfrequenzdemodulator (13) verbundenen ist, **dadurch gekennzeichnet, dass** der Mikrocontroller (µC) zur Niederfrequenzsignalübertragung geeignet mit einem im Messlichtstrahl (3) angeordneten Kontrollfotodetektor (8c) verbunden ist.

2. Laserdistanzmessgerät nach Anspruch 1, **dadurch gekennzeichnet, dass** der Kontrollfotodetektor (8c) als eine in ein Gehäuse der Laserdiode (4) integrierte Monitorfotodiode ausgebildet ist.

3. Laserdistanzmessgerät nach Anspruch 1 oder 2, **dadurch gekennzeichnet, dass** über den Kontrollfotodetektor (8c), den Mikrocontroller (µC), der Signalerzeugungseinheit (SEE), der Laserdiode (4) und den Messlichtstrahl (3) ein Regelkreis ausgebildet ist.

4. Laserdistanzmessgerät nach einem der Ansprüche 1 bis 3, **dadurch gekennzeichnet, dass** bei einer als Quadraturmodulator ausgebildeten Signalerzeugungseinheit (SEE) zwischen dem Mikrocontroller (µC) und der Signalerzeugungseinheit (SEE) zumindest ein vom Mikrocontroller (µC) steuerbares Amplitudensteuermittel (22) angeordnet ist und dass optional ein vom Mikrocontroller (µC) steuerbares Phasensteuermittel (21) angeordnet ist.

5. Laserdistanzmessgerät nach 4, **dadurch gekennzeichnet, dass** zumindest ein Amplitudensteuermittel bezüglich des Gleichanteils steuerbar ist.

6. Messverfahren für ein Laserdistanzmessgerät, wobei in einem ersten Schritt ein Niederfrequenzsignal generiert wird, mit dessen Hilfe in einem zweiten Schritt ein Hochfrequenzmischersignal (14) und ein Hochfrequenzmesssignal (9) derart erzeugt wird, dass ein niederfrequentes Mischprodukt zwischen dem Hochfrequenzmischersignal (14) und dem Hochfrequenzmesssignal (9) phasenstarr zu dem im ersten Schritt generierten Niederfrequenzsignal ist, und das Hochfrequenzmesssignal (9) in einem dritten Schritt von einer Laserdiode (4) über deren modulierten Messlichtstrahl (3) emittiert wird und von einem distanzierten Messobjekt (5) reflektiert wird, wobei der reflektierte Messlichtstrahl (3) in einem vierten Schritt zeitversetzt von einem Empfängerfotodetektor (8a) empfangen und das zeitversetzte Hochfrequenzmesssignal (9) unter Verwendung des Hochfrequenzmischersignals (14) demoduliert wird sowie in einem fünften Schritt ein aus der Demodulation des zeitversetzten Hochfrequenzmesssignals (9) hervorgehendes niederfrequentes Phasenlaufzeitsignal (S1) von einem Mikrocontroller (µC) zur Berechnung der Distanz (D) verwendet wird, **dadurch gekennzeichnet, dass** im dritten Schritt zumindest der niederfrequente Modulationsanteil des mit einem Kontrollfotodetektor (8c) detektierten modulierten Messlichtstrahls (3) der Laserdiode (4) dem Mikrocontroller (µC) zur wertmässigen Bestimmung eines Störmodulationsanteils bereitgestellt wird.

7. Messverfahren nach Anspruch 6, **dadurch gekennzeichnet, dass** der dritte Schritt durch eine über den Mikrocontroller (µC) geregelte Rückkopplung zum ersten Schritt zurück wirkt.

8. Messverfahren nach Anspruch 6 oder 7, **dadurch gekennzeichnet, dass** im ersten Schritt zwei um 90° phasenversetzte Niederfrequenzsignale generiert werden, welche in dem zweiten Schritt zu dem Hochfrequenzmesssignal (9) und dem Hochfrequenzmischersignal (14) quadraturmoduliert werden.

9. Messverfahren nach Anspruch 8, **dadurch gekennzeichnet, dass** im zweiten Schritt vom Mikrocontroller (μC) zumindest ein Niederfrequenzsignal bezüglich seiner Amplitude und/oder Phase geregelt wird.

10. Messverfahren nach einem der Ansprüche 7 bis 9, **dadurch gekennzeichnet, dass** im ersten Schritt auf einen Schreibbefehl hin zumindest ein aktueller Regelparameter ($\varphi_1$ $\varphi_2$, $A_1$, $A_2$) der Rückkopplung in einen nichtflüchtigen Speicher geschrieben wird, und auf einen Lesebefehl hin dieser Regelparameter mit dem des Speichers initialisiert wird.

Fig. 1

Fig. 2

Fig. 3

Fig. 4

Fig.5

Fig.6

**Europäisches Patentamt**

# EUROPÄISCHER RECHERCHENBERICHT

Nummer der Anmeldung

EP 02 01 7890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | WO 98 18019 A (GIGER KURT ;LEICA AG (CH)) 30. April 1998 (1998-04-30) * Zusammenfassung * * Seite 4, Zeile 17 - Seite 5, Zeile 7 * * Seite 7, Zeile 8 - Seite 11, Zeile 9 * --- | 1-3,6,7 | G01S17/36 G01S7/497 G01S7/491 |
| Y,D A | EP 0 439 011 A (SICK OPTIK ELEKTRONIK ERWIN) 31. Juli 1991 (1991-07-31) * Zusammenfassung * * Spalte 4, Zeile 4 - Spalte 5, Zeile 36 * --- | 1-3,6,7 4,9 | |
| A,D | DE 100 06 493 A (HILTI AG) 30. August 2001 (2001-08-30) * Zusammenfassung * --- | 1,6 | |
| A | WO 02 44754 A (GIGER KURT) 6. Juni 2002 (2002-06-06) * Zusammenfassung * * Seite 2, Zeile 6 - Seite 9, Zeile 16 * --- | 1,6 | |
| A | US 3 778 160 A (WOLCOTT J) 11. Dezember 1973 (1973-12-11) * Zusammenfassung * * Spalte 7, Zeile 31 - Spalte 10, Zeile 66 * --- | 1,6 | **RECHERCHIERTE SACHGEBIETE (Int.Cl.7)** G01S |
| A,D | EP 0 601 847 A (HUGHES AIRCRAFT CO) 15. Juni 1994 (1994-06-15) * Zusammenfassung * ----- | 1,6 | |

Der vorliegende Recherchenbericht wurde für alle Patentansprüche erstellt

| Recherchenort | Abschlußdatum der Recherche | Prüfer |
|---|---|---|
| DEN HAAG | 23. Januar 2003 | Roost, J |

## ANHANG ZUM EUROPÄISCHEN RECHERCHENBERICHT
## ÜBER DIE EUROPÄISCHE PATENTANMELDUNG NR.

EP 02 01 7890

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 9818019 | A | 30-04-1998 | DE | 19643287 A1 | 23-04-1998 |
| | | | AT | 195588 T | 15-09-2000 |
| | | | AU | 719134 B2 | 04-05-2000 |
| | | | AU | 4867897 A | 15-05-1998 |
| | | | DE | 59702217 D1 | 21-09-2000 |
| | | | WO | 9818019 A1 | 30-04-1998 |
| | | | EP | 0932835 A1 | 04-08-1999 |
| | | | JP | 2000505901 T | 16-05-2000 |
| | | | JP | 3161738 B2 | 25-04-2001 |
| | | | KR | 2000052660 A | 25-08-2000 |
| | | | US | 6463393 B1 | 08-10-2002 |
| EP 0439011 | A | 31-07-1991 | DE | 4002356 C1 | 28-02-1991 |
| | | | DE | 59108629 D1 | 30-04-1997 |
| | | | EP | 0439011 A2 | 31-07-1991 |
| | | | JP | 3188282 B2 | 16-07-2001 |
| | | | JP | 7229966 A | 29-08-1995 |
| | | | US | 5180922 A | 19-01-1993 |
| DE 10006493 | A | 30-08-2001 | DE | 10006493 A1 | 30-08-2001 |
| | | | JP | 2001255369 A | 21-09-2001 |
| | | | US | 2001013929 A1 | 16-08-2001 |
| WO 0244754 | A | 06-06-2002 | AU | 1202702 A | 11-06-2002 |
| | | | WO | 0244754 A1 | 06-06-2002 |
| US 3778160 | A | 11-12-1973 | KEINE | | |
| EP 0601847 | A | 15-06-1994 | US | 5289252 A | 22-02-1994 |
| | | | AU | 650209 B1 | 09-06-1994 |
| | | | CA | 2110889 A1 | 09-06-1994 |
| | | | DE | 69312880 D1 | 11-09-1997 |
| | | | DE | 69312880 T2 | 26-02-1998 |
| | | | EP | 0601847 A1 | 15-06-1994 |
| | | | ES | 2105138 T3 | 16-10-1997 |
| | | | JP | 2091454 C | 18-09-1996 |
| | | | JP | 6281741 A | 07-10-1994 |
| | | | JP | 7117585 B | 18-12-1995 |

EPO FORM P0461

Für nähere Einzelheiten zu diesem Anhang : siehe Amtsblatt des Europäischen Patentamts, Nr.12/82